(19) Europäisches Patentamt / European Patent Office / Office européen des brevets

(11) **EP 1 683 029 B1**

(12) **EUROPÄISCHE PATENTSCHRIFT**

(45) Veröffentlichungstag und Bekanntmachung des Hinweises auf die Patenterteilung:
**09.07.2008   Patentblatt 2008/28**

(21) Anmeldenummer: **04797568.5**

(22) Anmeldetag: **03.11.2004**

(51) Int Cl.:
*G06F 12/14* $^{(2006.01)}$

(86) Internationale Anmeldenummer:
**PCT/EP2004/012435**

(87) Internationale Veröffentlichungsnummer:
**WO 2005/045685 (19.05.2005 Gazette 2005/20)**

(54) **VERFAHREN ZUR SPEICHERUNG VON DATEN IN EINEM WAHLZUGRIFFSPEICHER UND VERSCHLÜSSELUNGS- UND ENTSCHLÜSSELUNGSVORRICHTUNG**

METHOD FOR STORING DATA IN A RANDOM ACCESS MEMORY AND ENCRYPTION AND DECRYPTION DEVICE

PROCEDE POUR STOCKER DES DONNEES DANS UNE MEMOIRE A ACCES ALEATOIRE ET DISPOSITIF DE CODAGE ET DE DECODAGE

(84) Benannte Vertragsstaaten:
**DE FR GB IT NL**

(30) Priorität: **10.11.2003   DE 10352401**

(43) Veröffentlichungstag der Anmeldung:
**26.07.2006   Patentblatt 2006/30**

(73) Patentinhaber: **Micronas GmbH**
**79108 Freiburg i. Br. (DE)**

(72) Erfinder:
• **PLOOG, Hagen**
**22145 Hamburg (DE)**
• **STEFFENS, Reinhard**
**80331 München (DE)**

(74) Vertreter: **Bickel, Michael**
**Westphal, Mussgnug & Partner**
**Patentanwälte**
**Herzog-Wilhelm-Strasse 26**
**80331 München (DE)**

(56) Entgegenhaltungen:
**EP-A- 1 022 659          US-A- 4 573 119**
**US-A- 5 095 525**

• **"DS5002FP SECURE MICROPROCESSOR CHIP" DESCRIPTION, Nr. 1, Februar 1998 (1998-02), XP002253631**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 683 029 B1

**Beschreibung**

Die vorliegende Erfindung betrifft ein Verfahren zur Speicherung von Daten in einem Wahlzugriffsspeicher und eine Verschlüsselungs- und Entschlüsselungsvorrichtung.

Zur Gewährleistung von Datensicherheit oder zum Schutz von Urheberrechten ist es bekannt, Daten in Festwertspeichern (ROM), wie beispielsweise EPROM, EEPROM, CD-ROM, DVD-ROM usw., verschlüsselt abzuspeichern. Diese Daten können dabei sowohl Daten ablauffähiger Programme (Programmcodes) als auch Video- oder Audiodaten betreffen. Weiterhin ist es bekannt, Video- oder Audiodaten verschlüsselt von einer Sendeeinrichtung zu einer Empfängereinrichtung zu übertragen.

Eine Nutzung der verschlüsselt abgespeicherten oder verschlüsselt übertragenen Daten soll dadurch nur solchen Nutzern ermöglicht werden, die über eine entsprechende Entschlüsselungseinheit (Decoder) mit einem "passenden" Schlüssel verfügen.

Herkömmliche Verschlüsselungsalgorithmen, wie beispielsweise das DES-Verfahren (DES = Data Encryption Standard) oder das AES-Verfahren (AES = Advanced Encryption Standard) verschlüsseln/kodieren die Daten blockweise, wobei beispielsweise beim DES-Verfahren jeweils 64 Datenbits in einem Block kodiert werden. Da bei diesen Verfahren die Anzahl der in einem Datenblock enthaltenen Datenbits üblicherweise größer ist als die Anzahl der Datenbits eines durch eine Verarbeitungseinheit verarbeitbaren Datenworts, ist es erforderlich, die nach dem Dekodieren eines Datenblockes erhaltenen Datenworte vor ihrer weiteren Verarbeitung durch die Verarbeitungseinheit in einem Wahlzugriffsspeicher (RAM = Random Access Memory) abzulegen.

Solche extern zu der verarbeitungseinheit angeordneten RAM, stellen insofern ein Sicherheitsrisiko dar, als die Möglichkeit besteht, die entschlüsselten Daten an der Verbindungsstrecke zwischen dem RAM und der Verarbeitungseinheit abzugreifen. Diese Daten, beispielsweise video- oder Audiodaten, können dann unverschlüsselt abgespeichert und somit einer nicht autorisierten Nutzung zugänglich gemacht werden.

Handelt es sich bei den im RAM abgespeicherten Daten um Daten eines Programmcodes so besteht die Gefahr, dass anhand des unverschlüsselt zugänglichen Programmcodes der Programmablauf durch Unbefugte ermittelt werden kann. Außerdem besteht die Gefahr, dass der das Programm ausführenden Einheit nicht autorisierter Programmcode zugeführt wird, um beispielsweise zusätzliche Funktionalitäten, die durch den autorisierten Programmcode nicht bereitgestellt werden sollen, bereitzustellen.

Die US 5,095,525 beschreibt eine Vorrichtung und ein Verfahren zum Speichern von Daten, die von einer CPU stammen, in einem Speicher. Bei diesem Verfahren liegt zu jedem zu speichernden Datenwort eine Adressinformation vor, wobei sowohl der Inhalt des Datenwortes als auch die Adressinformation vor dem Speichern permutiert werden.

Die EP 1 022 659 A2 beschreibt eine Schaltungsanordnung zur elektronischen Datenverarbeitung, die einen beschreibbaren Speicher, einen Verwürfelungsmustergenerator und eine Verwürfelungslogik aufweist. Die Verwürfelungslogik dient bei dieser Schaltungsanordnung zum Verwürfeln von Adress- und/oder Datensignalen der im beschreibbaren Speicher zu speichernden Daten gemäß Verwürfelungsmustersignale, die von dem Verwürfelungsmustergenerator erzeugt werden.

Ziel der vorliegenden Erfindung ist es ein sicheres Verfahren zur Speicherung von Daten in einem RAM anzugeben, das die genannten Nachteile nicht aufweist und das mit geringem Aufwand realisierbar ist, und eine Vorrichtung zur Verschlüsselung/ Entschlüsselung der in einem RAM abzuspeichernden Daten anzugeben.

Diese Ziele werden durch ein Verfahren nach Anspruch 1 und durch eine Vorrichtung nach Anspruch 9 gelöst. Vorteilhafte Ausgestaltungen der Erfindung sind Gegenstand der Unteransprüche.

Das erfindungsgemäße Verfahren zum Speichern von Daten in einem Wahlzugriffsspeicher (RAM), in dem Datenworte mit einer vorgegebenen Anzahl Datenbits abspeicherbar sind, sieht vor, vor der Speicherung eine Verschlüsselung eines jeden Datenwortes vorzunehmen, indem aus jedem Datenwort oder einem aus dem Datenwort abgeleiteten Datenwort durch eineindeutiges Umordnen/Permutieren der einzelnen Datenbits unter Verwendung eines ersten Permutationsschlüssels ein permutiertes Datenwort mit der vorgegebenen Anzahl Datenbits erzeugt wird.

Vorteilhafterweise werden bei diesem Verfahren die einzelnen Datenbits des permutierten Datenwortes vor dem Abspeichern unter Verwendung eines ersten Substitutionsschlüssels substituiert, wobei das durch Permutation und anschließende Substitution erzeugte verschlüsselte Datenwort in dem Speicher abgespeichert wird. In diesem Zusammenhang besteht auch die Möglichkeit, die Datenbits des zu verschlüsselnden Datenwortes vor der Permutation unter Verwendung eines ersten Substitutionsschlüssels zu substituieren und das aus der Substitution und der anschließenden Permutation erhaltene Datenwort als verschlüsseltes Datenwort abzuspeichern.

Die Verschlüsselung der einzelnen Datenworte erfolgt vorzugsweise in demselben Chip, in dem eine die Datenworte verarbeitende Verarbeitungseinheit integriert ist. Die von diesem Chip nach außen an den RAM-Speicher zur Abspeicherung übertragenen Datenworte liegen bei diesem Verfahren verschlüsselt, und damit geschützt gegen Störeinflüsse oder unbefugtes Abgreifen der Daten vor. Die Verschlüsselung erfolgt bei dem Verfahren datenwortweise, so dass - anders als bei einer blockweisen Verschlüsselung - keine zusätzlichen Speicher auf dem Chip für die Verschlüsselung bzw. eine Entschlüsselung erforderlich sind.

Die Permutation bzw. Umordnung der einzelnen Datenbits nach Maßgabe des Permutationsschlüssels stellt ein leistungsfähiges Verschlüsselungsverfahren dar. Bei einem Datenwort der Breite 32 Bit gibt es $32! \approx 2{,}6 \cdot 10^{35}$ verschiedene Permutationsmöglichkeiten. Diese Anzahl der Verschlüsselungsmöglichkeiten erhöht sich bei einem Datenwort der Länge 32 Bit um einen Faktor $2^{32}$, wenn neben der Permutation eine Substitution des Eingangsdatenwortes oder des bereits permutierten Datenwortes unter Verwendung eines Substitutionsschlüssels der Länge 32 Bit vorgenommen wird.

Die Substitution eines zu substituierenden Datenwortes nach Maßgabe des Substitutionsschlüssels erfolgt beispielsweise dadurch, dass jedem Datenbit des Datenwortes ein Schlüsselbit des Substitutionsschlüssels zugeordnet wird, wobei das jeweilige Datenbit abhängig vom Wert des zugeordneten Substitutionsschlüsselbits unverändert oder invertiert auf das aus der Substitution resultierende Datenwort abgebildet wird.

Der Permutationsschlüssel umfasst bei einer Ausführungsform eine der Anzahl der Datenbits des zu permutierenden Datenwortes entsprechende Anzahl eindeutige Teilschlüssel, die jeweils einem Datenbit des aus der Permutation resultierenden permutierten Datenwortes zugeordnet sind. Die einzelnen Teilschlüssel geben an, welches der Datenbits des zu permutierenden Datenwortes auf das jeweilige Datenbit abzubilden ist, dem der Teilschlüssel zugeordnet ist.

Jeder Teilschlüssel des Permutationsschlüssels umfasst dabei eine Anzahl Schlüsselbits, wobei vorzugsweise vorgesehen ist, die Abbildung eines Datenbits des zu permutierenden Datenwortes auf ein Datenbit des permutierten Datenwortes unter Verwendung eines Teilschlüssels stufenweise mit folgenden Verfahrensschritten durchzuführen:

a) Auswählen einer ersten Gruppe von Datenbits aus den Datenbits des zu permutierenden Datenwortes nach Maßgabe eines ersten Schlüsselbits des Teilschlüssels,

b) Auswählen einer zweiten Gruppe von Datenbits aus der anhand der vorherigen Auswahl erhaltenen ersten Gruppe von Datenbits nach Maßgabe eines zweiten Schlüsselbits des Teilschlüssels,

c) Wiederholen des Verfahrensschrittes b) unter Verwendung jeweils eines weiteren Schlüsselbits, um jeweils aus einer durch eine vorherige Auswahl erhaltenen Gruppe eine weitere Gruppe auszuwählen bis die ausgewählte Gruppe nur noch ein Datenbit umfasst, das dem Datenbit des permutierten Datenwortes entspricht.

Ein solches stufenweises Auswahlverfahren zur Abbildung eines Datenbits des zu permutierenden Datenwortes auf ein Datenbit des permutierten Datenwortes bietet den Vorteil, dass zu seiner Realisierung keine Speicherelemente erforderlich sind.

Der Permutationsschlüssel und gegebenenfalls der Substitutionsschlüssel werden vor einem neuen Beschreiben des RAM-Speichers, beispielsweise nach dem Einschalten eines den RAM-Speicher enthaltenden Gerätes, neu erzeugt.

Der Substitutionsschlüssel, der eine der Anzahl der Datenbits entsprechende Anzahl Substitutionsschlüsselbits umfasst, wird dabei erzeugt, indem eine entsprechende Anzahl Bits aus einer durch einen Zufallsgenerator bereitgestellten Sequenz herausgegriffen werden.

Bei der Erzeugung des Permutationsschlüssels ist zu beachten, dass sich die einzelnen Teilschlüssel unterscheiden müssen, um eine eindeutige Zuordnung eines Datenbits des zu permutierenden Datenwortes auf ein Datenbit des permutierten Datenwortes zu gewährleisten. Zur Erzeugung der einzelnen Teilpermutationsschlüssel, die jeweils einer Bitposition des permutierten Datenwortes zugeordnet sind, und die gemeinsam den Permutationsschlüssel ergeben, ist vorgesehen, nacheinander für jede Bitposition des permutierten Datenwortes einen Teilpermutationsschlüssel zu erzeugen und dabei jeweils zu überprüfen, ob der erzeugte Teilpermutationsschlüssel bereits für eine andere Bitposition erzeugt wurde. Wurde dieser Teilpermutationsschlüssel bereits erzeugt, so wird er verworfen und ein neuer Teilpermutationsschlüssel wird für die jeweilige Bitposition zufällig erzeugt. Ist der zufällig Bitposition zufällig erzeugt. Ist der zufällig erzeugte Teilpermutationsschlüssel noch nicht vorhanden, so wird dieser für die jeweilige Bitposition beibehalten. Dieses Verfahren wiederholt sich, bis jeder Bitposition des permutierten Datenwortes ein Teilpermutationsschlüssel für die Auswahl eines Datenbits des zu permutierenden Datenwortes zugewiesen ist.

Die Entschlüsselung der in dem RAM abgespeicherten Datenworte erfolgt in entsprechender Weise wie das Verschlüsselungsverfahren. Wird bei einem zweistufigen Verfahren mit Permutation und Substitution das zu verschlüsselnde Datenwort zunächst permutiert und dann substituiert, so wird beim Entschlüsseln das verschlüsselte Datenwort zunächst unter Verwendung eines zweiten Substitutionsschlüssels "zurück"-substituiert, um die bei der Verschlüsselung vorgenommene Substitution rückgängig zu machen, und anschließend unter Verwendung eines zweiten Permutationsschlüssels "zurück"-permutiert, um die bei der Verschlüsselung vorgenommene Permutation rückgängig zu machen.

Erfolgt bei der Verschlüsselung des Datenwortes zunächst eine Substitution und dann eine Permutation, so wird bei der Entschlüsselung das verschlüsselte Datenwort zunächst unter Verwendung des zweiten Permutationsschlüssels permutiert und anschließend substituiert, um das ursprüngliche Datenwort zurück zu gewinnen.

Abhängig von der Art der angewendeten Substitution kann der erste Substitutionsschlüssel identisch zu dem zweiten Substitutionsschlüssel gewählt werden, beispielsweise dann, wenn die Substitution darin besteht, nach Maßgabe der Schlüsselbits des Substitutionsschlüssel die einzelnen Datenbits unverändert oder invertiert abzubilden.

Die vorliegende Erfindung wird nachfolgend in Ausführungsbeispielen anhand von Figuren näher erläutert.

Figur 1    zeigt eine Anordnung mit einer Verschlüsselungsund Entschlüsselungsanordnung, die die in einem Wahlzugriffsspeicher abzuspeichernden Daten verschlüsselt und die aus dem Wahlzugriffsspeicher ausgelesenen Daten entschlüsselt.

Figur 2    zeigt ein Ausführungsbeispiel einer Verschlüsselungs- und Entschlüsselungsanordnung mit einer Verschlüsselungseinheit, einer Entschlüsselungseinheit, einem Schlüsselgenerator und einem Zufallsgenerator.

Figur 3    zeigt ein Ausführungsbeispiel einer Verschlüsselungseinheit, die eine Permutationseinheit und eine Substitutionseinheit umfasst.

Figur 4    veranschaulicht schematisch den Aufbau einer Permutationseinheit, die Auswahleinheiten umfasst.

Figur 5    zeigt ein Ausführungsbeispiel einer Auswahleinheit, die mehrere Auswahlstufen mit Auswahlschaltern umfasst.

Figur 6    veranschaulicht die Funktionsweise einer Auswahleinheit für ein Datenwort der Breite 8 Bit.

Figur 7    zeigt ein schaltungstechnisches Realisierungsbeispiel der in Figur 5 dargestellten Auswahlschalter.

Figur 8    zeigt schematisch ein Ausführungsbeispiel der in Figur 3 dargestellten Substitutionseinheit, die mehrere Substitutionselemente umfasst.

Figur 9    veranschaulicht ein mögliches Realisierungsbeispiel der in Figur 8 dargestellten Substitutionselemente.

Figur 10   veranschaulicht den Aufbau des Permutationsschlüssels aus Teilschlüsseln und Schlüsselbits und den Aufbau des Substitutionsschlüssels.

Figur 11   veranschaulicht den vollständigen Aufbau einer Permutationseinheit für eine Verschlüsselungseinheit gemäß Figur 2 für Datenworte mit 4 Bit.

Figur 12   zeigt die zu der in Figur 11 dargestellten Permutationseinheit korrespondierende Permutationseinheit zur Verwendung in einer Entschlüsselungseinheit gemäß Figur 2.

Figur 13   zeigt schematisch den Aufbau eines in dem Schlüsselgenerator vorhandenen internen Speichers zum Abspeichern eines ersten Permutationsschlüssels für die Verschlüsselung und eines zweiten Permutationsschlüssels für die Entschlüsselung.

In den Figuren bezeichnen, sofern nicht anders angegeben, gleiche Bezugszeichen gleiche Teile und Signale mit gleicher Bedeutung.

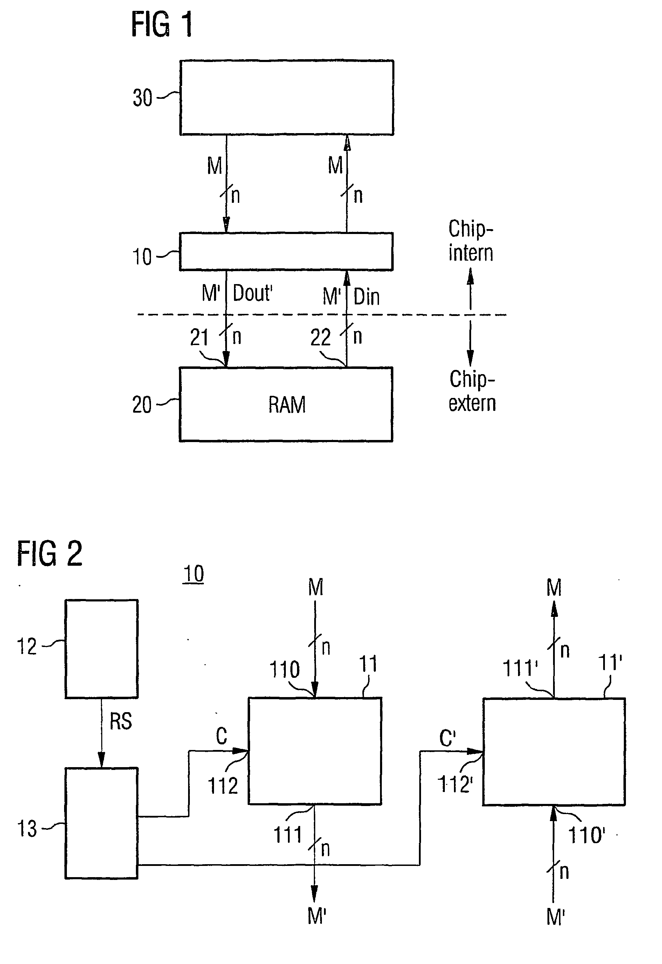

Figur 1 zeigt einen Wahlzugriffsspeicher (RAM) 20, der dazu ausgebildet ist, Datenworte der Länge n-Bit abzuspeichern. Der Speicher 20 besitzt einen Eingang 21 zum Einlesen abzuspeichernder Datenworte und einen Ausgang 22 zum Auslesen abgespeicherter Datenworte. Notwendige Steuerleitungen, über welche dem Speicher die Speicheradressen mitgeteilt werden, an welchen die einzelnen Datenworte abgespeichert oder von welchen die einzelnen Datenworte ausgelesen werden sollen, sind in Figur 1 nicht dargestellt.

Die Verarbeitung der in den Speicher 20 eingelesenen Datenworte bzw. der aus dem Speicher ausgelesenen Datenworte erfolgt in einer Datenverarbeitungseinheit 30, beispielsweise einem Prozessor. Abhängig von der Art dieses Prozessors handelt es sich bei den in dem Speicher 20 abgelegten Datenworte beispielsweise um Datenworte eines Programmcodes, der durch den Prozessor ausgeführt wird, oder um Datenworte von Video- oder Audiodaten, die über den Prozessor 30 über geeignete Ausgabeeinheiten zur Wahrnehmung gebracht werden.

Die Datenverarbeitungseinheit 30 und der Speicher 20 sind nicht auf einem gemeinsamen Chip integriert, was in Figur 1 durch die gestrichelte Linie zwischen der Datenverarbeitungseinheit 30 und dem Speicher 20 veranschaulicht ist. Um ein "Abhören" oder Stören der Datenkommunikation zwischen der Datenverarbeitungseinheit 30 und dem Speicher 20 zu verhindern, ist zwischen der Datenverarbeitungseinheit 30 und dem Speicher 20 auf dem selben Chip, auf dem die Datenverarbeitungseinheit 30 angeordnet ist, eine Verschlüsselungs- und Entschlüsselungsvorrichtung 10 vorgesehen. Diese Vorrichtung 10 verschlüsselt von der Datenverarbeitungseinheit 30 ausgegebene Datenworte M, um verschlüsselte Datenworte M' zur Verfügung zu stellen, die in dem Speicher 20 wortweise abgelegt werden. In umgekehrter Richtung entschlüsselt die Vorrichtung 10 die in dem Speicher 20 verschlüsselt abgelegten Datenworte M' um das ursprüngliche, durch die Datenverarbeitungseinheit 30 verarbeitbare Datenwort wieder herzustellen. M bezeichnet in der Figur 1 und im Folgenden ein beliebiges unverschlüsseltes Datenwort der Länge n und M' ein beliebiges durch Verschlüsselung eines Datenwortes M entstandenes verschlüsseltes Datenwort der Länge n.

Figur 2 zeigt schematisch den Aufbau einer solchen Verschlüsselungs- und Entschlüsselungsvorrichtung 10. Die dargestellte Vorrichtung umfasst eine Verschlüsselungseinheit 11, die einen Eingang der Breite n-Bit zur Zuführung eines unverschlüsselten Datenwortes M und einen Ausgang 111 zur Ausgabe eines verschlüsselten Datenwortes M' aufweist. Die Verschlüsselung des Datenwortes M erfolgt nach Maßgabe eines ersten Schlüssels C, der durch einen Schlüsselgenerator 13 bereitgestellt wird. Zur Bereitstellung dieses ersten Schlüssels C ist dem Schlüsselgenerator 13 eine binäre Zufallssequenz RS von einem binären Zufallszahlengenerator 12 zugeführt.

Die Vorrichtung 10 umfasst weiterhin eine Verschlüsselungseinheit 11' mit einem Eingang 110' zur Zuführung eines verschlüsselten Datenwortes M' der Breite n-Bit und mit einem Ausgang 111' zur Bereitstellung des aus dem verschlüsselten Datenwort M' erzeugten entschlüsselten Datenwortes M. Die Entschlüsselung erfolgt nach Maßgabe eines zweiten Schlüssels C', der auf den ersten Schlüssel C abgestimmt ist und der ebenfalls durch den Schlüsselgenerator 13 zur Verfügung gestellt wird.

Die Verschlüsselungseinheit bildet das Datenwort unter Verwendung des ersten Schlüssel C eindeutig auf das verschlüsselte Datenwort M' ab, wobei gilt:

$$M' = E(M, C) \qquad (1),$$

wobei für E die durch die Verschlüsselungseinheit 11 realisierte Verschlüsselungsfunktion steht. Entsprechend gilt:

$$M = D(M', C') \qquad (2).,$$

wobei D für die durch die Entschlüsselungseinheit 11'realisierte Entschlüsselungsfunktion steht.

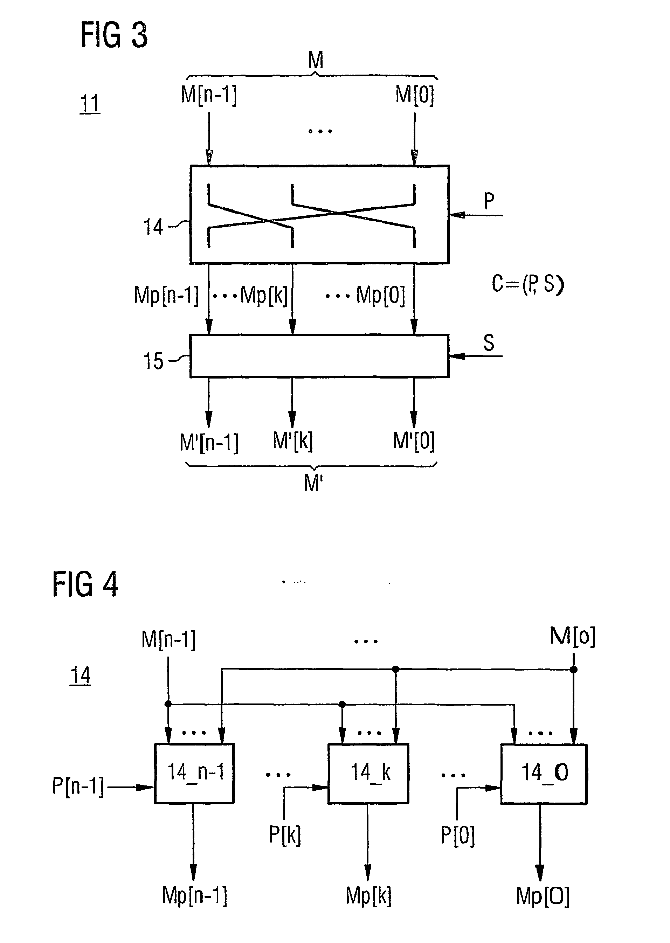

Figur 3 zeigt schematisch ein Ausführungsbeispiel der Verschlüsselungseinheit 11, die in dem Beispiel eine Permutationseinheit 14 und eine Substitutionseinheit 15 umfasst. Die Permutationseinheit 14 weist Eingänge zur Zuführung der einzelnen Datenbits M[n-1]...M[0] des Datenwortes M und Ausgänge zur Bereitstellung von Datenbits Mp[n-1], Mp[k], Mp[0] eines permutierten Datenwortes Mp auf. Die einzelnen Datenbits Mp[n-1]...Mp[0] des permutierten Datenwortes Mp resultieren aus den Datenbits M[n-1]...M[0] des Datenwortes M durch Permutieren/Umordnen nach Maßgabe eines Permutationsschlüssels P. Die Permutation erfolgt dabei eineindeutig, das heißt, je ein Datenbit des unverschlüsselten Datenwortes M wird auf ein Datenbit des permutierten Datenwortes Mp abgebildet.

Die Datenbits Mp[n-1]...Mp[0] des permutierten Datenwortes Mp werden in dem Beispiel anschließend durch eine Substitutionseinheit 15 nach Maßgabe eines Substitutionsschlüssels S substituiert, wobei die Substitutionseinheit 15 die Datenbits des verschlüsselten Datenwortes M' bereitstellt. Durch die Substitutionseinheit 15 wird nach Maßgabe des Substitutionsschlüssels S je ein Datenbit des permutierten Datenwortes Mp auf ein Datenbit M'[n-1]...M'[0] des verschlüsselten Datenwortes M' abgebildet.

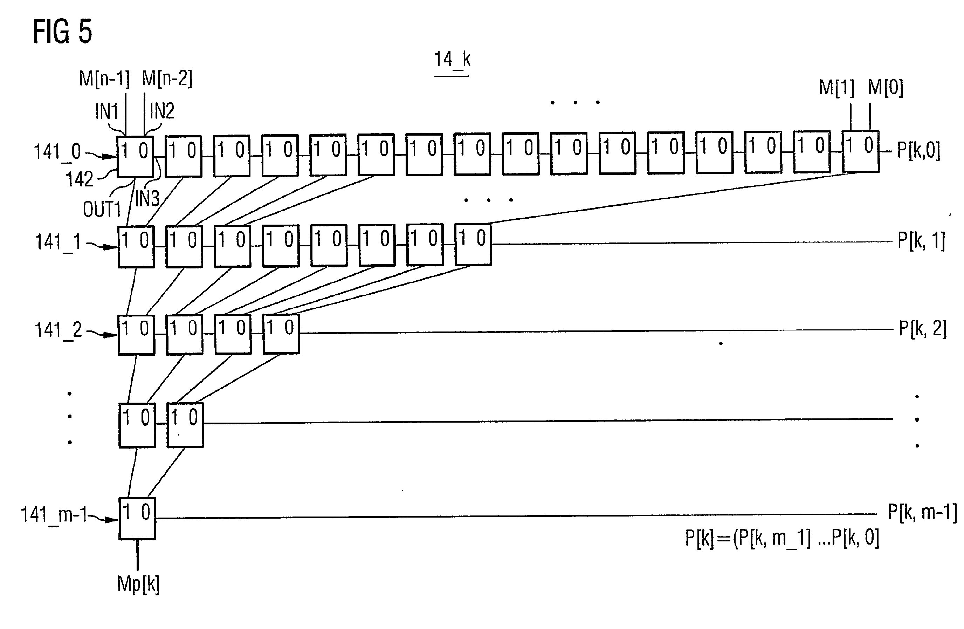

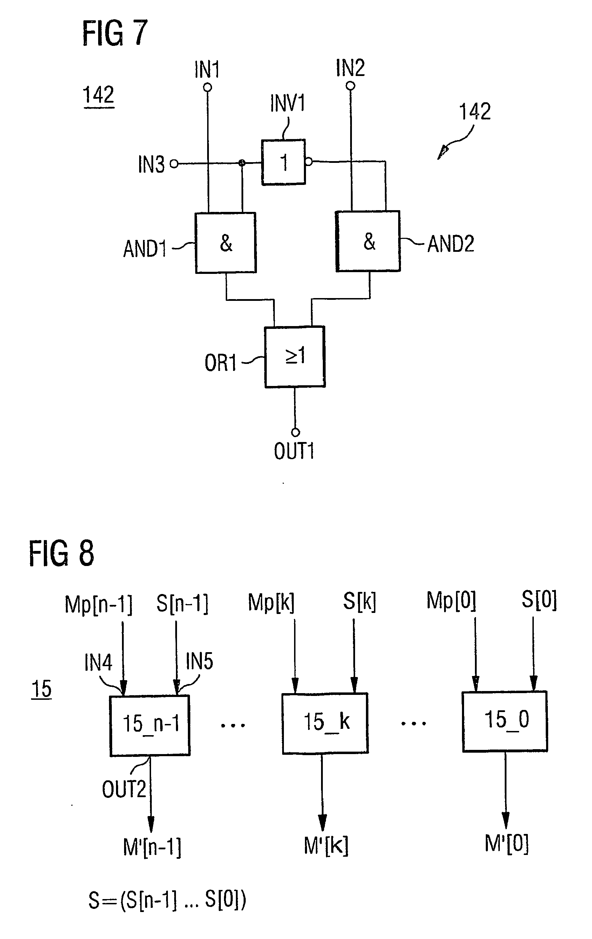

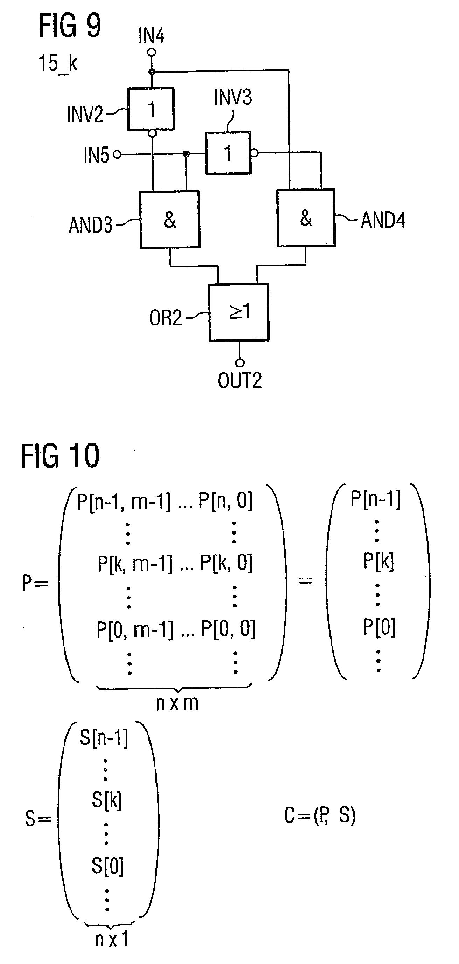

Der Aufbau und die Funktionsweise der Permutationseinheit 14 werden nachfolgend anhand der Figuren 5 bis 7 erläutert. Anschließend werden der Aufbau und die Funktionsweise der Substitutionseinheit 15 anhand der Figuren 8 und 9 erläutert.

Bezugnehmend auf Figur 4 besitzt die Permutationseinheit 14 eine der Anzahl der Datenbits des zu verschlüsselnden Datenwortes M entsprechende Anzahl Auswahleinheiten 14_n-1...14_0, wobei jeder dieser Auswahleinheiten alle Datenbits M[n-1]...M[0] des zu verschlüsselnden Datenwortes M zugeführt sind und wobei die einzelnen Auswahleinheiten 14_n-1...14_0 jeweils ein Datenbit Mp[n-1]...Mp[0] des permutierten Datenwortes Mp zur Verfügung stellen. Die Abbildung eines der Datenbits des unverschlüsselten Datenwortes M auf eines der Datenbits des permutierten Datenwortes Mp erfolgt in den Auswahleinheiten 14_n-1...14_0 nach Maßgabe von Teilpermutationsschlüsseln P[n-1], P[k], P[0]. Diese Teilpermutationsschlüssel unterscheiden sich jeweils, um jedes der Datenbits des Eingangsdatenwortes M genau einmal auf ein Datenbit des permutierten Datenwortes Mp abzubilden, Die Teilpermutationsschlüssel ergeben gemeinsam den Permutationsschlüssel, wobei gilt: P = (P[n-1], ... P[0]).

Die einzelnen Auswahleinheiten 14_n-1...14_0 sind identisch aufgebaut, wobei der Aufbau einer beliebigen dieser Auswahleinheiten, im vorliegenden Fall der Auswahleinheit 14_k nachfolgend anhand von Figur 5 erläutert wird.

Diese Auswahleinheit 14_k stellt das Datenbit Mp[k] aus den Datenbits M[n-1]...M[0] des Datenwortes M nach Maßgabe des Teilpermutationsschlüssels P[k] zur Verfügung. Dieser Teilpermutationsschlüssel umfasst m Schlüsselbits P[k,m-1]...P[k,0].

Die Auswahleinheit 14_k umfasst mehrere Auswahlstufen 141_0...141_m-1. Einer ersten Auswahlstufe 141_0 sind dabei alle Datenbits des Eingangsdatenwortes M zugeführt. Diese erste Auswahlstufe 141_0 wählt nach Maßgabe eines ersten Schlüsselbits P[k,0] des Teilpermutationsschlüssels P[k] eine erste Gruppe von Datenbits aus, die einer zweiten Auswahlstufe 141_1 zugeführt sind. Die zweite Auswahlstufe 141_1 bildet aus dieser ersten Gruppe nach Maßgabe eines zweiten Schlüsselbits P[k,1] eine zweite Gruppe, die der dritten Auswahleinheit 141_2 zugeführt ist.

In dem dargestellten Beispiel erfolgt von Auswahlstufe zu Auswahlstufe eine Reduktion der in den jeweiligen Gruppen vorhandenen Datenbits um einen Faktor 2, so dass nach m = $\log_2(n)$ Auswahlstufen nur noch ein Datenbit vorhanden ist, das dem Datenbit Mp[k] des permutierten Datenwortes Mp entspricht. In dem Beispiel, in dem n = 32 = $2^5$ gilt, sind somit m = 5 Auswahlstufen vorhanden.

Jede der Auswahlstufen umfasst in dem Beispiel eine Anzahl von Auswahlschaltern 142, denen jeweils zwei Datenbits einer Datengruppe zugeführt sind, und die jeweils nach Maßgabe eines Permutationsschlüsselbits eines der beiden Datenbits auswählen und an die nächste Auswahlstufe weitergeben.

Die Zuführung der einzelnen Datenbits zu den Auswahlschaltern der jeweiligen Auswahlstufe erfolgt derart, dass einem Auswahlschalter jeweils zwei Datenbits zugeführt sind, die bezogen auf die Gruppe, aus denen die jeweilige Auswahlstufe eine Auswahl trifft, aufeinanderfolgende Bitpositionen besitzen. In dem Beispiel gemäß Figur 5 wird dabei das jeweils höherwertige Bit einem ersten Eingang IN1 und das jeweils niederwertigere Bit einem zweiten Eingang IN2 des jeweiligen Auswahlschalters 142 zugeführt sind. Bei einem Schlüsselbit "1" wird in dem dargestellten Beispiel das am Eingang IN1 anliegende Bit, also das höherwertige Bit an den Ausgang OUT1 und damit an die nächste Auswahlstufe weitergegeben.

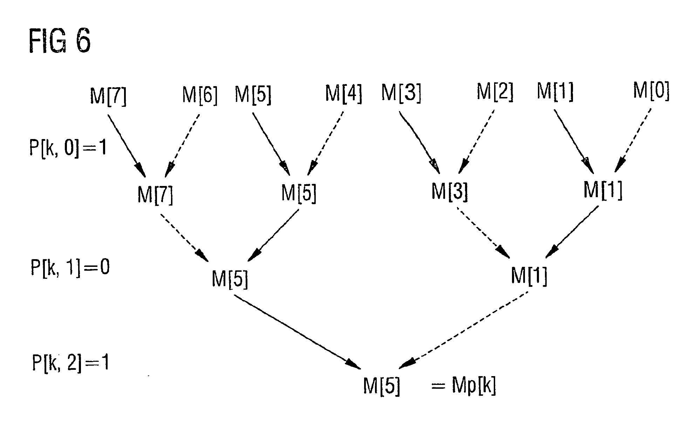

Die Funktionsweise der in Figur 5 dargestellten Auswahleinheit wird nachfolgend anhand eines 8 Bit breiten Datenwortes M in Figur 6 erläutert. Von diesen 8 Datenbits M[7]...M[0] wird eines ausgewählt, um das Datenbit Mp[k] des permutierten Datenwortes zu bilden. Das erste Schlüsselbit P[k,0] des Teilschlüssels P[k] beträgt 1, so dass von jeweils zwei in ihrer Wertigkeit aufeinanderfolgenden Datenbits das jeweils höherwertige ausgewählt wird, woraus eine erste Gruppe mit den Datenbits M[7], M[5], M[3], M[1] resultiert. Von jeweils zwei bezüglich ihrer Wertigkeit aufeinanderfolgenden Datenbits, also den Datenbits M[7], M[5] und M[3], M[1] wird nach Maßgabe des zweiten Schlüsselbits P[k,1] je ein Datenbit ausgewählt. Dieses Schlüsselbit ist in dem Beispiel "0", so dass jeweils das niederwertigere der beiden Datenbits, also die Datenbits M[5], M[1] ausgewählt werden. Aus dieser resultierenden weiteren Gruppe von Datenbits wird nach Maßgabe des dritten Schlüsselbits P[k,2] eines, im vorliegenden Fall das höherwertigere, also das Datenbit M[5] ausgewählt, um das Datenbit Mp[k] des permutierten Datenwortes zu bilden.

Ordnet man die Datenbits in jeder der Auswahlgruppen abhängig von Ihrer Wertigkeit und wählt man von zwei in ihrer Wertigkeit benachbarten Datenbits bei einem Schlüsselbit "1" jeweils das höherwertigere und bei einem Schlüsselbit "0" jeweils das niederwertigere dieser beiden Datenbits aus, so entspricht der Wert der Bit-Position des ausgewählten Datenbits, im vorliegenden Fall des Datenbits M[5], dem dezimalen Äquivalent des Teilsschlüssels P[k], wie nachfolgend erläutert ist:

Betrachtet man den Teilschlüssel P[k] als binäre Zahlenfolge, dessen signifikantestes Bit (MSB) durch das Schlüsselbit P[k,m-1] der letzten Auswahlstufe und dessen am wenigsten signifikante Bit (LSB) durch das Schlüsselbit P[k,0] der ersten Auswahlstufe gebildet wird, so entspricht das dezimale Äquivalent dieser Binärfolge, im vorliegenden Fall $101_2 = 5_{10}$ der Bitposition des aus dem Datenwort M ausgewählten Datenbits M[5].

Ein schaltungstechnisches Realisierungsbeispiel eines der Auswahlschalter 142 ist in Figur 7 dargestellt. Zur Realisierung der erläuterten Auswahlfunktion umfasst der Auswahlschalter zwei UND-Gatter AND1, AND2, deren Ausgänge einem ODER-Gatter OR1 zugeführt sind, wobei der Ausgang dieses ODER-Gatters den Ausgang OUT1 des Auswahlschalters bildet. Je einer der Eingänge IN1, IN2 zur Zuführung der Datenbits ist einem der UND-Gatter AND1, AND2 zugeführt. Der andere Eingang des UND-Gatters AND1 ist an den dritten Eingang IN3 zur Zuführung eines Schlüsselbits gekoppelt, wobei dem anderen Eingang des UND-Gatters AND2 dieses Schlüsselbit invertiert über einen Inverter INV1 zugeführt ist. Bei Anlegen einer logischen "1" am dritten Eingang IN3 wird somit das am ersten Eingang IN1 anliegende Datenbit über das erste UND-Gatterbit AND1 und das ODER-Gatter OR1 an den Ausgang OUT1 weitergegeben. Bei einer logischen "0" am dritten Eingang IN3 wird entsprechend das Datenbit am zweiten Eingang IN2 über das zweite UND-Gatter AND2 und das ODER-Gatter OR1 an den Ausgang OUT1 weitergegeben.

Bezugnehmend auf Figur 8 umfasst die Substitutionseinheit 15 eine der Anzahl der Datenbits entsprechende Anzahl Substitutionselemente 15_n-1...15_0, denen jeweils ein Datenbit des zu substituierenden Datenwortes, in dem Beispiel gemäß Figur 3 des permutierten Datenwortes Mp, zugeführt sind. Der Schlüssel S, nach dessen Maßgabe die Substitution erfolgt, umfasst n Schlüsselbits S[n-1]...S[0], wobei jedem der Substitutionselemente eines dieser Schlüsselbits S[n-1]...S[0] zugeführt ist. Die Substitutionselemente 15_n-1...15_0 sind dazu ausgebildet, nach Maßgabe des jeweiligen Substitutionsschlüsselbits S[n-1]...S[0] das dem jeweiligen Substitutionselement 15_n-1...15_0 zugeführte Datenbit Mp[n-1]...Mp[0] unverändert oder invertiert auszugeben.

Ein schaltungstechnisches Realisierungsbeispiel eines solchen Substitutionselements ist in Figur 9 dargestellt. Das Substitutionselement 15_k umfasst ein erstes und zweites UND-Gatter AND3, AND4 und ein den UND-Gattern AND3, AND4 nachgeschaltetes ODER-Gatter OR2 an dessen Ausgang das substituierte Datenbit zur Verfügung steht. Das zu substituierende Datenbit wird dem Substitutionselement über einen ersten Eingang IN4 zugeführt, wobei dieses Datenbit über einen ersten Inverter INV2 dem ersten UND-Gatter AND3 invertiert und dem zweiten UND-Gatter AN4 unverändert zugeführt ist. Das an einem zweiten Eingang IN5 des Substitutionselements anliegende jeweilige Substitutionsschlüsselbit wird dem ersten Gatter AND3 unverändert und dem zweiten UND-Gatter AND4 invertiert mittels eines zweiten Inverters INV3 zugeführt. Diese Anordnung gewährleistet, dass bei einem Substitutionsschlüsselbit "1" das am ersten Eingang IN4 anliegende Datenbit invertiert und bei einem Substitutionsschlüsselbit "0" unverändert am Ausgang OUT2 zur Verfügung gestellt wird.

In dem Ausführungsbeispiel gemäß Figur 3 wird das verschlüsselte Datenwort M' aus dem unverschlüsselten Datenwort M durch Permutation und anschließende Substitution des aus der Permutation resultierenden permutierten Datenwortes Mp erzeugt. Selbstverständlich besteht auch die Möglichkeit, das Datenwort M zunächst unter Verwendung des Substitutionsschlüssels M zu substituieren und das daraus resultierende substituierte Datenwort anschließend unter Verwendung des Permutationsschlüssels P zu permutieren, um zu dem verschlüsselten Datenwort M' zu gelangen.

Maßgeblich für die Leistungsfähigkeit eines Verschlüsselungssystems ist die Anzahl möglicher unterschiedlicher Schlüssel. Der Schlüssel C zur Verschlüsselung eines Datenwortes M setzt sich in dem erläuterten Beispiel aus einem Permutationsschlüssel P und einem Substitutionsschlüssel S zusammen. Der Permutationsschlüssel P umfasst eine der Anzahl der Datenbits entsprechende Anzahl Teilschlüssel für deren Länge $m=\log_2(n)$ gilt. Bezugnehmend auf Figur 10 kann der Permutationsschlüssel als Vektor mit n Teilschlüsseln P[n-1]...P[0] oder als n x m-Matrix der einzelnen Teilschlüsselbits P[n-1,m-1]...P[0,0] betrachtet werden. Für Datenworte der Länge n=32 umfasst der Permutationsschlüssel 32 jeweils verschiedene Teilschlüssel P[n-1]...P[0] woraus 32! unterschiedliche Schlüsselkombinationen resultieren. Berücksichtigt man dass für den Substitutionsschlüssel S $2^n$ Möglichkeiten zur Verfügung stehen, so ergibt sich für die Anzahl N der möglichen Schlüssel C für zu verschlüsselnde Datenworte der Länge n=32: $N = (32!) \cdot 2^{32}$.

Der Substitutionsschlüssel S für die Verschlüsselung und die Entschlüsselung kann auf einfache Weise als Teil einer binären Zufallssequenz erzeugt werden.

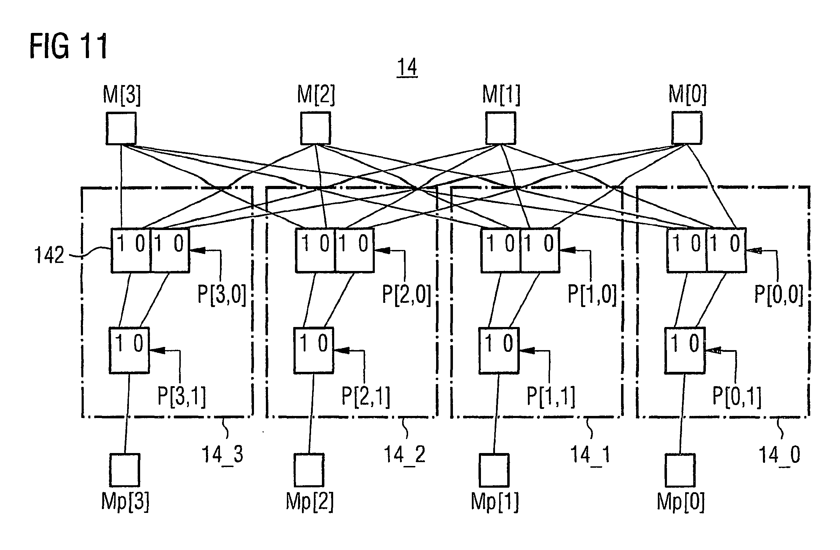

Ein Verfahren zur Erzeugung des Permutationsschlüssels wird nachfolgend für ein Datenwort der Länge n=4 Bit anhand der Figuren 11 bis 13 erläutert.

Figur 11 zeigt zunächst eine erste Permutationseinheit 14 zur Erzeugung eines permutierten Datenwortes Mp aus einem Datenwort M mit n=4 Auswahleinheiten 14_3, 14_2, 14_1, 14_0, die jeweils 2-stufig ($m=\log_2 4=2$) ausgebildet sind.

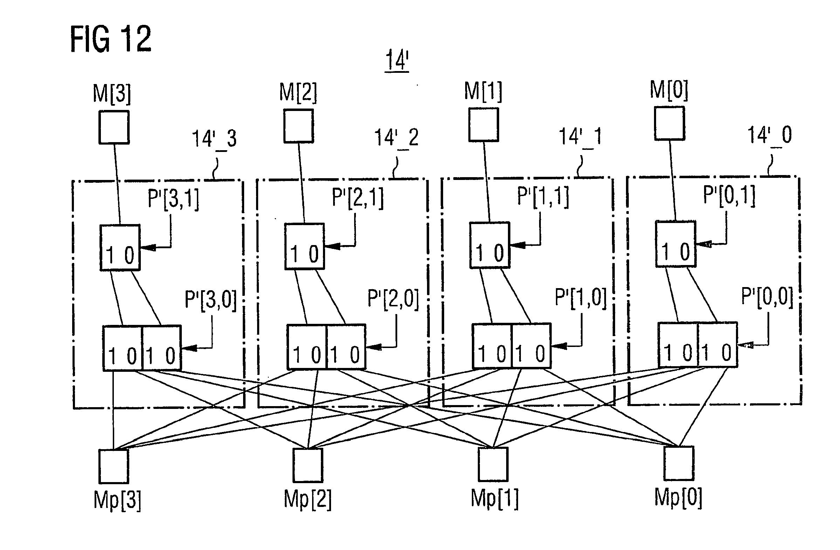

Figur 12 zeigt eine zu der Permutationseinheit 14 gemäß Figur 11 korrespondierende zweite Permutationseinheit, die zum Rückgängigmachen der durch die erste Permutationseinheit 14 vorgenommenen Permutation beim Entschlüsseln des Datenwortes in der Entschlüsselungseinheit (11 in Figur 3) dient. Diese zweite Permutationseinheit 14' ist identisch zu der ersten Permutationseinheit 14 aufgebaut und umfasst vier Auswahleinheiten 14'_3, 14'_2, 14'_1, 14'_0. Jede dieser Auswahleinheiten 14'_3 ... 14'_0 dient dazu, eines der Datenbits Mp[3]...Mp[0] des permutierten Datenwortes Mp auf eines der Datenbits M[3]...M[0] des ursprünglichen Datenwortes M zurück abzubilden. Diese Auswahl eines der Datenbits in den einzelnen Auswahleinheiten 14'_3..,14'_0 erfolgt jeweils nach Maßgabe von Teilschlüsseln P'[3]... P'[0] eines zweiten Permutationsschlüssels P', wobei in dem dargestellten Beispiel gilt: P'=(P'[3], P'[2], P'[1], P'[0]), wobei die einzelnen Teilschlüssel P'[3]...P'[0] jeweils zwei Teilschlüsselbits P'[3,1]... P'[0,0] umfassen.

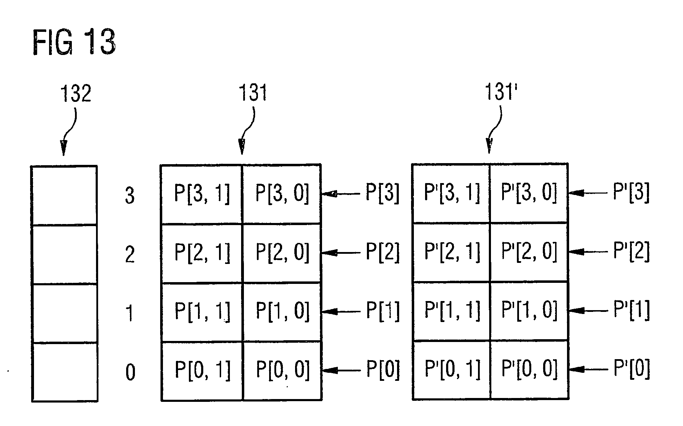

Die Erzeugung der Teilschlüssel P[3]... P[0] des ersten Permutationsschlüssels P sowie der zugehörigen Teilschlüssel P'[3]...P'[0] des zweiten Permutationsschlüssels P' wird nachfolgend anhand von Figur 13 erläutert.

Zur Erzeugung des ersten und zweiten Permutationsschlüssels P, P' umfasst der Schlüsselgenerator (13 in Figur 2) einen ersten und einen zweiten Schlüsselspeicher 131, 131' sowie ein Zuordnungsregister 132. Die Schlüsselspeicher 131, 131' sind dazu ausgebildet, jeweils n Teilschlüssel der Schlüsselbreite $m=\log_2(n)$ zu speichern. Für n=4 sind in jedem Schlüsselspeicher vier Teilschlüssel der Länge 2 abspeicherbar. Die Zuordnung der in dem ersten Schlüsselspeicher 131 abgespeicherten Teilschlüssel zu den Auswahleinheiten 14_3...14_0 und damit zu den einzelnen Datenbits des permutierten Datenwortes Mp erfolgt über die Adresse des Schlüsselspeichers 131, der zeilenweise adressierbar ist und der in dem Beispiel n=4 Zeilen umfasst. Die Speicheradresse eines Teilschlüssels in diesem ersten Speicher 131 entspricht dabei der Bitposition des Datenbits des permutierten Datenwortes, der der jeweilige Schlüssel zugeordnet ist. Ein Teilschlüssel P[k] an der Speicheradresse k des Schlüsselspeichers 131 ist damit dem k-ten Datenbit Mp[k] des permutierten Datenwortes Mp zugeordnet, wobei k eine der möglichen Zeilenadressen O...n-1 des Speichers repräsentiert.

Die Zuordnung der Teilschlüssel P'[3]...P'[0] des zweiten Teilschlüssels P' zu den Auswahleinheiten 14'_3 ... 14'_0 bzw. den Datenbits M[3]...M[0] des ursprünglichen Datenwortes erfolgt in entsprechender Weise. Das heißt, der an der Speicherposition k des zweiten Schlüsselspeichers 131' abgespeicherte Teilschlüssel P'[k] ist der Auswahleinheit 14'_k zugeordnet und bestimmt, welches der Datenbits des permutierten Datenwortes Mp auf das Datenbit M[k] an der k-ten Position des Datenwortes M abgebildet werden soll.

Die Erzeugung der Teilschlüssel P[3]...P[0] des ersten Permutationsschlüssels und der zweiten Teilschlüssel P'[3]...P'[0] erfolgt aufeinander abgestimmt in der im folgenden erläuterten Weise.

Die Teilschlüssel des ersten Permutationsschlüssels P werden aufeinanderfolgend als zufällige Binärsequenzen der Länge m=2 unter Verwendung des in Figur 2 dargestellten Funktionsgenerators 12 erzeugt. Wie erläutert müssen sich die einzelnen Teilschlüssel voneinander unterscheiden, um eine eindeutige Zuordnung der Datenbits des zu permutierenden Datenwortes M auf die Datenbits des permutierten Datenwortes Mp zu erreichen. In dem anhand der Figuren 11 und 12 erläuterten Beispiel gibt es n=4 unterschiedliche Teilschlüssel, die den vier Auswahleinheiten beliebig zugeordnet werden können.

Jedem der im vorliegenden Fall möglichen unterschiedlichen Teilschlüssel "11", "10", "01", "00" ist eine Speicherposition des Zuordnungsregisters 132 zugeordnet, wobei in dem Zuordnungsregister an der jeweiligen Speicherposition ein vorgegebener Wert eingetragen wird, wenn der zugeordnete Teilschlüssel bereits an einer Speicherposition des Speichers 131, und damit für eine der Auswahleinheiten 14_3...14_0, bereits erzeugt wurde, um ein erneutes Erzeugen desselben Schlüssels an einer anderen Speicheradresse und damit für eine andere Auswahleinheit 14_3...14_0 zu vermeiden.

Die Zuordnung eines bestimmten der möglichen Teilschlüssel zu einer Speicheradresse des Zuordnungsregisters 132 erfolgt in dem Beispiel durch unmittelbares Abbilden des durch den Teilschlüssel repräsentierten Wert auf die Adresse der Speicherposition des Abbildungsspeichers 132. So ist einem Teilschlüssel "10" beispielsweise die Speicherposition $10_2$=2 des Zuordnungsspeichers 132 zugeordnet. Gilt für einen Teilschlüssel allgemein P[k]=$w_{n-1}$ ... wo, so gilt für die diesem Teilschlüssel zugeordnete Adresse W des Abbildungsspeichers:

$$W = \sum_{i=0}^{i=n-1} w_i 2^i$$

Für die Erzeugung des Permutationsschlüssels werden aufeinanderfolgend für die einzelnen Speicheradressen des ersten Permutationsschlüsselspeichers 131 jeweilige Teilschlüssel zufällig erzeugt, wobei nach Erzeugung eines jeweiligen Teilschlüssels anhand der Überprüfung des Zuordnungsregisters ermittelt wird, ob ein solcher Teilschlüssel bereits erzeugt wurde. Wurde ein solcher Teilschlüssel bereits erzeugt, so wird der Teilschlüssel verworfen und ein neuer Teilschlüssel wird zufällig generiert. Dieser Vorgang wird solange wiederholt, bis Teilschlüssel für alle Speicherpositionen, und damit für alle Auswahleinheiten der Permutationseinheit 14 erzeugt wurden.

Wird einer der möglichen Teilschlüssel zum ersten Mal erzeugt, so wird an der diesem Schlüssel zugeordneten Speicheradresse des Zuordnungsspeichers 132 ein bestimmter Wert, beispielsweise eine "1" eingetragen. Wird dieser Teilschlüssel zufällig für eine andere Speicherposition des Speichers 131 nochmals erzeugt, wird dies anhand des eingetragenen Wertes in dem Zuordnungsspeicher 132 erkannt, und der Teilschlüssel wird für diese andere Speicherposition verworfen.

Wie bereits erläutert, entspricht der binäre Wert eines Teilschlüssels P[3]...P[0], der einer Auswahleinheit 14_3...14_0 bzw. einem Datenbit Mp[3]...Mp[0] des permutierten Datenwortes Mp zugeordnet ist, der Datenposition des durch die jeweilige Auswahleinheit ausgewählten Datenbits M[3]...M[0] des Eingangswortes M. Entsprechend geben die Teilschlüssel P'[n-1]...P'[0] des zweiten Permutationsschlüssels P' jeweils an, welches der Datenbits des permutierten Datenwortes Mp auf das Datenbit M[3]...M[0] abgebildet werden soll, dem der jeweilige Teilschlüssel zugeordnet ist.

Gilt allgemein, dass ein dem k-ten Datenbit Mp[k] des permutierten Datenwortes Mp zugeordneter Teilschlüssel P[k] das i-te Datenbit M[i] des zu permutierenden Datenwortes auf dieses Datenbit des permutierten Datenwortes Mp abbildet, so muss umgekehrt, der dem i-ten Datenbit zugeordnete Teilschlüssel P'[i] das k-te Datenbit des permutierten Datenwortes Mp auf dieses Datenbit abbilden.

Der zweite Schlüsselspeicher 131' ist entsprechend des ersten Schlüsselspeichers 131 organisiert, das heißt die Adressen, an denen die einzelnen Teilschlüssel P'[n-1]...P'[0] abgespeichert sind, entsprechen den Bitpositionen der Datenbits M[n-1]...M[0], denen die einzelnen Teilschlüssel zugeordnet sind.

Um nun zu einem zufällig erzeugten, dem k-ten Datenbit des permutierten Datenwortes Mp zugeordneten Teilschlüssel P[k] des ersten Permutationsschlüssels P einen passenden Teilschlüssel des zweiten Permutationsschlüssels P' zu erzeugen, wird der Adresswert k des ersten Teilschlüssels P[k] an der Adresse in dem zweiten Schlüsselspeicher 131' eingetragen, deren Wert dem durch den ersten Schlüssel repräsentieren Binärwert i entspricht. Für P[k]=i gilt also: P'[i]=k

Die Erzeugung des ersten und zweiten Permutationsschlüssels lässt sich anhand des folgenden Algorithmus beschreiben:

```
Zeile 1:   FOR k = (n-1) DOWNTO 0
Zeile 2:   Hole Zufallszahl vom Generator und berechne i
Zeile 3:   Prüfe, ob MapReg (i) = 1 gilt, falls ja, gehe zu
           Zeile 2
Zeile 4:   Setze MapReg(i) = 1
Zeile 5:   Setze o_store(k) = i
Zeile 6:   Setze i_store(i) = k
Zeile 4:   NEXT k.
```

MapReg(i) steht dabei für den Wert an der Adresse k des Zuordnungsregisters. o_store(k) steht für den Wert an der Adresse k des ersten Speichers, und i_store(i) steht für den Wert an der Adresse i des zweiten Speichers 131'.

Wie bereits erläutert wird die bei der Verschlüsselung und entsprechend bei der Entschlüsselung vorgenommene Permutation durch eine Substitution nach Maßgabe eines Substitutionsschlüssels ergänzt. Diese Substitution kann beim Verschlüsseln sowohl vor der Permutation als auch nach der Permutation erfolgen, wobei bei der Entschlüsselung in umgekehrter Reihenfolge vorgegangen wird. Erfolgt beim Verschlüsseln die Substitution nach der Permutation, so erfolgt beim Entschlüsseln die erneute Substitution vor der Permutation. Bei der bereits erläuterten Substitution, bei der nach Maßgabe der Substitutionsschlüsselbits des jeweils zugeordnete Datenbit invertiert oder unverändert weitergegeben wird, wird beim Entschlüsseln derselbe Substitionsschlüssel wie beim Verschlüsseln verwendet.

Bezugszeichenliste

| | |
|---|---|
| AND1-AND4 | UND-Gatter |
| C,C' | Schlüssel |
| IN1-IN5 | Eingänge |
| INV1, INV2 | Inverter |
| M | Datenwort |
| M[n-1] ... M[0] | Datenbits |
| M'[n-1]...M'[0] | Datenbits eines verschlüsselten Datenwortes |
| Mp[n-1]...Mp[0] | Datenbits eines permutierten Datenwortes |
| OR1, OR2 | ODER-Gatter |
| OUT1, OUT2 | Ausgänge |
| P | Permutationsschlüssel |
| P[n-1]...P[0] | Teilschlüssel eines Permutationsschlüssels |
| S | Substitutionsschlüssel tes |
| 10 | Verschlüsselungs- und Entschlüsselungeinheit |
| 11 | Verschlüsselungeinheit |
| 11' | Entschlüsselungeinheit |
| 13 | Schlüsselgenerator |
| 14 | Permutationseinheit |
| 14_n-1...14_0 | Auswahleinheit |
| 15 | Substitutionseinheit |
| 15_n-1...15_0 | Substitutionseinheiten |
| 20 | Wahlzugriffsspeicher, RAM |
| 20 | Zufallsgenerator |
| 21 | Eingang des RAM |
| 22 | Ausgang des RAM |
| 30 | Datenverarbeitungseinheit |
| 110 | Eingang der Verschlüsselungseinheit |
| 110' | Eingang der Entschlüsselungseinheit |
| 111 | Ausgang der Verschlüsselungseinheit |
| 111' | Ausgang der Entschlüsselungseinheit |
| 112 | Schlüsseleingang der Verschlüsselungseinheit |
| 112' | Schlüsseleingang der Entschlüsse- |
| | lungseinheit |
| 131 | erster Permutationsschlüsselspeicher |
| 131' | zweiter Permutationsschlüsselspeicher |
| 132 | Auswahlregister |
| 141_n-1...141_0 | Auswahlstufen |
| 142 | Auswahlschalter |

Patentansprüche

1. Verfahren zum Speichern von Daten in einem Wahlzugriffsspeicher, in dem Datenworte, die jeweils eine vorgegebene Anzahl Datenbits umfassen, abspeicherbar sind, bei dem vor der Speicherung eine verschlüsselung eines jeden Datenwortes (M) erfolgt, indem aus jedem Datenwort (M) oder einem aus dem Datenwort (M) abgeleiteten Datenwort durch ein eindeutiges Permutieren der einzelnen Datenbits (M[n-1]-M [0]) unter Verwendung eines ersten aus einer binären Zufallssequenz erzeugten Permutationsschlüssels (P), ein permutiertes Datenwort (Mp) mit der vorgegebenen Anzahl Datenbits erzeugt wird, bei dem der Permutationsschlüssel (P) eine der Anzahl n der Datenbits entsprechende Anzahl eindeutige Teilschlüssel (p[n-1]-P[0]) aufweist, die jeweils einem Datenbit (Mp[n-1]-Mp [0]) des permutierten Datenwortes (Mp) zugeordnet sind, und die jeweils das auf dieses Datenbit (Mp[n-1]-Mp[0]) abzubildende Datenbit (M[n-1]-M[0]) des zu permutierenden Datenwortes (M) angeben, wobei jeder Teilschlüssel (P[n-1]-P [0]) eine Anzahl Schlüsselbits (P[n-1,m-1]-P [n-1, 0], P [k,m-1]-P [k, 0], P [0,m-1] - P [0, 0]) umfasst, und bei dem die Abbildung eines Datenbits (M[n-1]-M[0]) des zu permutierenden Datenwortes (M) auf ein Datenbit (Mp[k]) des permutierten Datenwortes unter verwendung eines Teilschlüssels (P[k]) stufenweise mit folgenden Verfahrensschritten erfolgt:

   a) Auswählen einer ersten Gruppe von Datenbits des zu permutierenden Datenwortes (Mp) nach Maßgabe eines ersten Schlüsselbits (P [k, 0]) des Teilschlüssels (P[k]),
   b) Auswählen einer zweiten Gruppe von Datenbits aus der ersten Gruppe von Datenbits nach Maßgabe eines zweiten Schlüsselbits (P[k, 1]) des Teilschlüssels (P[k]),
   c) Wiederholen des Verfahrensschrittes b) unter Verwendung jeweils eines weiteren Schlüsselbits (P [k, 2]... P [k,m-1]) bis die ausgewählte Gruppe nur noch ein Datenbit umfasst, das dem Datenbit (Mp[k]) des permutierten Datenwortes (Mp) entspricht.

2. Verfahren nach Anspruch 1, bei dem die einzelnen Datenbits (M[n-1]-M[0]) des permutierten Datenwortes (Mp) vor dem Abspeichern unter verwendung eines ersten Substitutionsschlüssels substituiert werden, um das verschlüsselte Datenwort (M') zur Verfügung zu stellen.

3. Verfahren nach Anspruch 1, bei dem die einzelnen Datenbits des Datenwortes (M) vor dem Umordnen unter Verwendung eines ersten Substitutionsschlüssels (S) substituiert werden, um ein substituiertes Datenwort zur Verfügung zu stellen.

4. Verfahren nach Anspruch 1, bei dem die Anzahl der in einer Gruppe von Datenbits enthaltenen Datenbits von Stufe zu Stufe um einen Faktor 2 reduziert wird.

5. Verfahren nach einem der vorangehenden Ansprüche, bei dem der erste Substitutionsschlüssel (S) eine der Anzahl der Datenbits des zu substituierenden Datenwortes (Mp) entsprechende Anzahl Schlüsselbits (S[n-1]...S[0]) aufweist, wobei jedes Datenbit des zu substituierenden Datenwortes (Mp) nach Maßgabe eines dieser Schlüsselbits (S[n-1]...S [0]) unverändert oder invertiert auf ein Datenbit (M' [n-1]...M' [0]) des substituierten Datenwortes (M') abgebildet wird.

6. Verfahren nach einem der vorangehenden Ansprüche, bei dem der Permutationsschlüssel (P) und der Substitutionsschlüssel (S) vor einem neuen Beschreiben des Speichers nach einem Löschen neu erzeugt werden.

7. Verfahren nach einem der vorangehenden Ansprüche, das zur Erzeugung eines Permutationsschlüssels (P) folgende Verfahrensschritte umfasst:

   a) zufälliges Erzeugen eines Teilpermutationsschlüssels und Zuordnen des Teilschlüssels einer Bitposition des permutierten Datenwortes,
   b) Überprüfen, ob der erzeugte Teilpermutationsschlüssel bereits für eine andere Bitposition des permutierten Datenwortes erzeugt wurde, und Beibehalten des erzeugten Teilpermutationsschlüssels, wenn er noch nicht erzeugt wurde, und Verwerfen des erzeugten Teilpermutationsschlüssels, wenn er bereits erzeugt wurde.
   c) Durchführen der Verfahrensschritte a) und b) bis für jede Bitposition des permutierten Datenwortes (Mp) ein Teilschlüssel erzeugt ist.

8. Verfahren nach einem der vorangehenden Ansprüche, bei dem ein aus einem Datenwort (M) unter Verwendung des ersten Schlüssels erzeugtes Datenwort (M') nach dem Auslesen aus dem Speicher unter Verwendung eines zweiten Permutationsschlüssel (P'), der auf den ersten Permutationsschlüssel (P) abgestimmt ist, permutiert wird, um das Datenwort zu erzeugen.

9. Vorrichtung zur Verschlüsselung/Entschlüsselung eines Datenbits (M[n-1], M[k], M[0]) umfassenden Datenwortes (M), die eine Permutationseinheit (14) mit folgenden Merkmale aufweist:

   - Dateneingänge zur Zuführung der Datenbits (M[n-1], M[k], M[0]) des zu permutierenden Datenwortes (M),
   - Ausgänge zur Bereitstellung der Datenbits (Mp [n-1], Mp[k], Mp[0]) eines permutierten Datenwortes (Mp) der vorgegebenen Länge (n),
   - permutationsschlüsseleingänge zur Zuführung eines Permutationsschlüssels (P), der eine der Anzahl der Datenbits entsprechende Anzahl (n) Teilschlüssel (P[n-1]... P[0]) umfasst,
   - einen Signalgenerator (13) der den Permutatzonsschlüssel (P) aus einer binären Zufallssequenz (RS) erzeugt,
   - eine der Anzahl der Datenbits entsprechende Anzahl Auswahleinheiten (14_n-1, 14_k, 14_0), denen jeweils ein Teilschlüssel zugeordnet ist und die jeweils ein Datenbit (Mp[n-1], Mp[k], Mp [0]) des permutierten Datenwortes (Mp) nach Maßgabe je eines der Teilschlüssel (P[n-1]...P [0]) aus den Datenbits des zu permutierenden Datenwortes (M) bereitstellen, wobei jede Auswahleinheit (14_k) eine der Anzahl von Permutationsschlüsselbits der Teilschlüssel entsprechende Anzahl aufeinanderfolgend angeordneter Auswahlstufen (141_n-1, 141_k, 141_0) aufweist, wobei eine erste Auswahlstufe (141_0) dazu ausgebildet ist, nach Maßgabe eines ersten Schlüsselbits (P[k,0]) eine erste Gruppe von Datenbits aus dem zu permutierenden Datenwort (M) auszuwählen und bereitzustellen, und wobei nachfolgende Auswahlstufen (141_1, 141_2, 141_m-1) dazu ausgebildet sind, jeweils nach Maßgabe eines Schlüsselbits (P[k,1], P[k,2], P[k,m-1]) aus der von der jeweils vorherigen Auswahlstufe bereitgestellten Gruppe von Datenbits eine Untergruppe auszuwählen.

10. Vorrichtung nach Anspruch 9, bei der der Permutationseinheit (14) eine Substitutionseinheit vorgeschaltet oder nachgeschaltet ist, die nach Maßgabe eines Substitutionsschlüssels (S) Datenbits (Mp[n-1], Mp[k], Mp[0]) eines zu substituierenden Datenwortes (Mp) substituiert.

**Claims**

1. Method for storing data in a random access memory, in which data words, which in each case comprise a given number of data bits, can be stored, in which prior to storage each data word (M) is encrypted, in that from each data word (M), or data word derived from the data word (M), through a clear permutation of the individual data bits (M[n-1]-M [0]) using a first permutation key (P) generated from a binary random sequence, a permutated data word (Mp) with the given number of data bits is generated, in which the permutation key (P) has a number of clear sub-keys (P[n-1] - P[0]) corresponding to the number n of data bits, these [sub-keys] in each case being assigned to a data bit (Mp[n-1] - Mp [0]) of the permutated data word (Mp), and which in each case define that data bit (M[n-1]-M[0]) of the data word (M) which is to be permutated and which is to be mapped onto this data bit (Mp[n-1] - Mp[0]), wherein each sub-key (P[n-1] - P [0]) comprises a number of key bits (P[n-1, m-1] - P [n-1, 0], P [k, m-1] -P [k, 0], P [0,m-1] - P [0,0]), and in which the mapping of a data bit (M[n-1]-M[0]) of the data word (M), which is to be permutated, on a data bit (Mp[k]) of the permutated data word using a sub-key (P[k]) takes place in a step-wise manner, with the following steps:

a) Selection of a first group of data bits of the data word (Mp) that is to be permutated, in accordance with a first key bit (P [k, 0]) of the sub-key (P[k]),
b) Selection of a second group of data bits from the first group of data bits, in accordance with a second key bit (P [k, 1]) of the sub-key (P[k]),
c) Repetition of step b) using in each case one further key bit (P [k, 2] ... P [k, m-1]) until the selected group comprises only one data bit, which corresponds to the data bit (Mp[k]) of the permutated data word (Mp).

2. Method according to claim 1, in which prior to saving, the individual data bits (M[n-1] - M[0]) of the permutated data word (Mp) are substituted using a first substitution key, in order to provide the encrypted data word (M').

3. Method according to claim 1, in which prior to rearrangement, the individual data bits of the data word (M) are substituted using a first substitution key (S), in order to provide a substituted data word.

4. Method according to claim 1, in which the number of data bits contained in a group of data bits is reduced from one stage to another by a factor of 2.

5. Method according to one of the preceding claims, in which the first substitution key (S) has a number of key bits (S[n-1]... S[0]) corresponding to the number of data bits of the data word (Mp) that is to be substituted, wherein each data bit of the data word (Mp) that is to be substituted according to one of these key bits (S[n-1]...S[0]) is mapped unchanged or inverted on a data bit (M' [n-1]...M'[0]) of the substituted data word (M').

6. Method according to one of the preceding claims, in which the permutation key (P) and the substitution key (S) are newly generated before new writing to the memory after a deletion.

7. Method according to one of the preceding claims, which comprises the following method steps for the production of a permutation key (P):

a) Random generation of a sub-permutation-key and allocation of the sub-key to a bit position of the permutated data word,
b) Checking whether the sub-permutation-key that has been generated has already been generated for a different bit position of the permutated data word, and retaining the generated sub-permutation-key if it has not yet been generated, and discarding the generated sub-permutation-key if it has already been generated,
c) Executing steps a) and b) until a sub-key has been generated for each bit position of the permutated data word (Mp).

8. Method according to one of the preceding claims, in which after being read out of the memory, a data word (M') generated from a data word (M) using a first key is permutated using a second permutation key (P') that is matched to the first permutation key (P), in order to generate the data word.

9. Device for encryption / decryption of a data word (M) containing data bits (M[n-1], M[k], M[0]), which has a permutation unit (14) with the following features :

- data inputs for supplying the data bits (M[n-1], M[k], M[0]) of the data word (M) that is to be permutated,
- outputs for providing the data bits (Mp[n-1], Mp [k], Mp [0]) of a permutated data word (Mp) of the specified length (n),
- permutation key inputs for supplying a permutation key (P) that comprises a number (n) of sub-keys (P[n-1]... P[0]) that corresponds to the number of data bits,
- a signal generator (13) that generates the permutation key (P) out of a binary random sequence (RS),
- a number of selection units (14_n-1, 14_k, 14_0) corresponding to the number of data bits, each [unit] being assigned a sub-key, and respectively providing a data bit (Mp[n-1], Mp[k], Mp [0]) of the permutated data word (Mp), in accordance in each case with one of the sub-keys (P[n-1]... P[0]), from the data bits of the of the data word (M) that is to be permutated, wherein each selection unit (14_k) has a number of selection stages (141_n-1, 141_k, 141_0) arranged consecutively that corresponds to the number of permutation key bits of the sub-key, wherein a first selection stage (141_0) is designed to select and provide, in accordance with a first key bit (P [k, 0]), a first group of data bits from the data word (M) that is to be permutated, and wherein subsequent selection stages (141_1,141_2, 141_m-1) are designed in order to select, in each case in accordance with a key bit (P [k,1], P [k, 2], P [k,m-1]), a sub-group from the group of data bits provided by the previous selection stage in each case.

10. Method according to claim 9, in which inserted upstream or downstream of the permutation unit (14) is a substitution unit which, in accordance with a substitution key (S), substitutes data bits (Mp[n-1], Mp [k], Mp [0]) of a data word (Mp) that is to be substituted.

## Revendications

1. Procédé d'enregistrement de données dans une mémoire à accès aléatoire dans lequel s'enregistrent des mots de données comprenant respectivement un nombre prédéfini de bits de données, et avant l'enregistrement, chaque mot de données (M) est codé en ce qu'à partir de chaque mot de données (M) ou d'un mot de données déduit du mot de données (M), par une permutation univoque des différents bits de données (M[n-1] -M [0]), et en utilisant une première clé de permutation (P) générée à partir d'une séquence binaire aléatoire, on forme un mot de données, permuté, (Mp) ayant un nombre prédéfini de bits de données, et selon lequel la clé de permutation (P) comporte un nombre de clés partielles univoques (P[n-1]-P [0]) correspondant au nombre (n) de bits de données, ces clés partielles étant respectivement associées à un bit de données (Mp [n-1] - Mp [0]), du mot de données (Mp) permuté, et ces clés partielles indiquent respectivement le bit de données (M[n-1] -M [0]) du mot de données à permuter (M) qu'il faut former sur ce bit de données (Mp [n-1] - Mp [0]),

chaque clé partielle (P[n-1]-P [0]) comprenant un nombre de bits de clés (P[n-1,m-1]-P [n-1, 0], P [k, m-1]-P [k, 0], P [0,m-1]- P [0, 0]) et selon lequel la copie d'un bit de données (M[n-1] -M [0]) du mot de données (M) à permuter sur un bit de données (Mp [k]) du mot de données permuté, se fait en utilisant une clé partielle (P[k]) de façon échelonnée selon des étapes de procédé suivantes :

a) sélection d'un premier groupe de bits de données du mot de données (Mp) à permuter, selon l'indication d'un premier bit de clé (P [k, 0]) de la clé partielle (P[k]),
b) sélection d'un second groupe de bits de données dans le premier groupe de bits de données selon l'indication d'un second bit de clés (P [k, 1]) de la clé partielle (P[k]),
c) répétition de l'étape de procédé b) en utilisant respectivement un autre bit de clé (P [k, 2]... P [k, m-1]) jusqu'à ce que le groupe sélectionné ne comprenne plus qu'un bit de données, qui correspond au bit de données (Mp[k]) du mot de données permuté (Mp).

2. Procédé selon la revendication 1, selon lequel on substitue les différents bits de données (M[n-1] -M [0]) du mot de données permuté (Mp) avant l'enregistrement en mémoire en utilisant une première clé de substitution pour rendre disponible le mot de données (M'), codé.

3. Procédé selon la revendication 1, selon lequel les différents bits de données du mot de données (M) sont substitués avant la transformation en utilisant une première clé de substitution (S), pour disposer d'un mot de données substitué.

4. Procédé selon la revendication 1, selon lequel on réduit le nombre de bits de données contenus dans un groupe de bits de données, d'un niveau à l'autre chaque fois d'un coefficient 2.

5. Procédé selon l'une des revendications précédentes selon lequel le premier code de substitution (S) comporte un nombre de bits de données du mot de données à substituer (Mp) correspondant au nombre de bits de clé (S[n-1]...S[0]), et chaque bit de données du mot de données (Mp) à substituer est invariable après indication de l'un de ces bits de clé (S[n-1]... S [0]) ou est copié de façon inversée sur un bit de données (M' [n-1]... M' [0]) du mot de données substitué (M').

6. Procédé selon l'une des revendications précédentes selon lequel on génère la clé de permutation (P) et la clé de substitution (S) avant toute nouvelle écriture dans la mémoire après un effacement.

7. Procédé selon l'une des revendications précédentes, selon lequel pour générer une clé de permutation (P) on exécute les étapes de procédé suivantes :

a) génération aléatoire d'une clé de permutation partielle et association de la clé partielle à une position de bits du mot de données, permuté,
b) vérification si la clé partielle de permutation, générée, a déjà été générée pour une autre position de bits du mot de données, permuté et conservation de la clé de permutation partielle générée si cette clé n'a pas déjà été développée et rejet de la clé de permutation partielle, générée si elle a déjà été générée,

c) exécution des étapes de procédé a) et b) jusqu'à ce que chaque position de bit du mot de données permutées (Mp) d'une clé partielle a été générée.

8. Procédé selon l'une des revendications précédentes selon lequel à partir d'un mot de données (M) et en utilisant le mot de données (M') généré avec la première clé, après lecture dans la mémoire en utilisant une seconde clé de permutation (P'), définie en fonction de la première clé de permutation (P) on effectue une permutation pour générer le mot de données.

9. Dispositif de codage/décodage d'un bit de données (M[n-1], M[k], M[0]) d'un mot de données (M) qui contrôle l'unité de permutation (10) avec les caractéristiques suivantes :

   - entrées de données pour fournir des bits de données (M[n-1], M[k], M[0]) du mot de données à permuter (M),
   - les sorties pour fournir le bit de données (Mp[n-1], Mp[k], Mp[0]) d'un mot de données permutées (Mp) de la longueur (n) prédéfinie,
   - entrées de codage de permutation pour fournir une clé de permutation (P) comprenant un nombre (n) de clés partielles (P[n-1]... P[0]) correspondant au nombre de bits de données,
   - un générateur de signal (13) qui génère la clé de permutation (P) à partir d'une séquence aléatoire binaire (RS),
   - un nombre d'unités de sélection (14-n-1, 14-k, 14-0) correspondant au nombre de bits de données et à ces unités de sélection est associé respectivement une clé partielle et qui fournissent respectivement un bit de données (Mp[n-1], Mp[k], Mp[0]) du mot de données (Mp), permuté selon l'indication de chacune des clés partielles (P[n-1]... P[0]) à partir des bits de données du mot de données (M) à permuter, et chaque unité de sélection (14-k) comporte un nombre d'étages de sélection (141-n-1, 141-k, 141-0), successifs, correspondant au nombre de bits de clé de permutation de la clé partielle,
   un premier étage de sélection (141-0) étant réalisé pour que selon l'indication d'un premier bit de clés (P[k, 0]) on sélectionne un premier groupe de bits de données à partir du mot de données (M) à permuter, et les étages de sélection suivants (141-1, 141-2, 141-m-1) sont réalisés de façon que selon l'indication d'un bit de clé (P[k, 1], P[k, 2], P[k,m-1]) respectif, et à partir du groupe de bits de données fourni par l'étage de sélection précédent respectif, on sélectionne un sous-groupe.

10. Dispositif selon la revendication 9, selon lequel l'unité de permutation (14) est précédée ou suivie d'une unité de substitution, qui selon l'indication d'une clé de substitution (S), substitue des bits de données (Mp[n-1], Mp[k], Mp[0]) d'un mot de données (Mp) à substituer.

# FIG 1

30

M ↓ /n    M ↑ /n

10

M' | Dout'    M' | Din

21 /n    22 /n

20    RAM

Chip-intern

Chip-extern

# FIG 2

10

12

RS

13

M ↓ /n

110    11

C → 112

111 /n

M'

M ↑ /n

111'    11'

C' → 112'

110'

/n

M'

## FIG 3

11

M

M[n-1]     M[0]

· · ·

14

P

Mp[n-1] · · · Mp[k] · · · Mp[0]

C = (P, S)

15

S

M'[n-1]     M'[k]     M'[0]

M'

## FIG 4

14

M[n-1]     · · ·     M[o]

P[n-1] → 14_n-1     · · · 14_k     · · · 14_0

P[k]     P[0]

Mp[n-1]     Mp[k]     Mp[O]

# FIG 5

14_k

M[n-1] M[n-2]     . . .     M[1] M[0]

IN1  IN2

141_0    142
OUT1  IN3

141_1

141_2

141_m-1

Mp[k]

P[k,0]

P[k, 1]

P[k, 2]

P[k, m-1]

P[k]=(P[k, m_1] ...P[k, 0)

EP 1 683 029 B1

## FIG 6

M[7]    M[6]  M[5]      M[4]  M[3]      M[2]  M[1]      M[0]

P[k, 0]=1

M[7]          M[5]          M[3]          M[1]

P[k, 1]=0

M[5]                      M[1]

P[k, 2]=1

M[5]    = Mp[k]

## FIG 7

142

IN1  IN2

INV1

142

IN3

1

AND1  &  &  AND2

OR1  ≥1

OUT1

## FIG 8

Mp[n-1]  S[n-1]  Mp[k]  S[k]  Mp[0]  S[0]

IN4  IN5

15

15_n-1  ...  15_k  ...  15_0

OUT2

M'[n-1]  M'[k]  M'[0]

S = (S[n-1] ... S[0])

## FIG 9

15_k

IN4

INV2 — | 1 | — INV3

| 1 |

IN5

AND3 — | & |   | & | — AND4

OR2 — | ≥1 |

OUT2

## FIG 10

$$P = \begin{pmatrix} P[n-1, m-1] \dots P[n, 0] \\ \vdots \qquad\qquad \vdots \\ P[k, m-1] \dots P[k, 0] \\ \vdots \qquad\qquad \vdots \\ P[0, m-1] \dots P[0, 0] \\ \vdots \qquad\qquad \vdots \end{pmatrix} = \begin{pmatrix} P[n-1] \\ \vdots \\ P[k] \\ \vdots \\ P[0] \\ \vdots \end{pmatrix}$$

$$\underbrace{\qquad\qquad}_{n \times m}$$

$$S = \begin{pmatrix} S[n-1] \\ \vdots \\ S[k] \\ \vdots \\ S[0] \\ \vdots \end{pmatrix} \qquad C = (P, \ S)$$

$$\underbrace{\qquad}_{n \times 1}$$

# FIG 11

EP 1 683 029 B1

FIG 12

14'

M[3]   M[2]   M[1]   M[0]

14'_3   14'_2   14'_1   14'_0

P'[3,1]   P'[2,1]   P'[1,1]   P'[0,1]

1 0   1 0   1 0   1 0

P'[3,0]   P'[2,0]   P'[1,0]   P'[0,0]

1 0 1 0   1 0 1 0   1 0 1 0   1 0 1 0

Mp[3]   Mp[2]   Mp[1]   Mp[0]

EP 1 683 029 B1

## FIG 13

132

131

131'

| | | | |
|---|---|---|---|
| | 3 | P[3, 1] | P[3, 0] |

← P[3]

| P'[3, 1] | P'[3, 0] |
|---|---|

← P'[3]

2   P[2, 1]   P[2, 0] ← P[2]    P'[2, 1]   P'[2, 0] ← P'[2]

1   P[1, 1]   P[1, 0] ← P[1]    P'[1, 1]   P'[1, 0] ← P'[1]

0   P[0, 1]   P[0, 0] ← P[0]    P'[0, 1]   P'[0, 0] ← P'[0]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5095525 A
- EP 1022659 A2